**Europäisches Patentamt**

**European Patent Office**

**Office européen des brevets**

(19)

(11) Veröffentlichungsnummer: **0 009 622**
**B1**

(12)

# EUROPÄISCHE PATENTSCHRIFT

(45) Veröffentlichungstag der Patentschrift:
**27.04.83**

(51) Int. Cl.³: **H 01 B 19/00**

(21) Anmeldenummer: **79103199.0**

(22) Anmeldetag: **29.08.79**

(54) **Verfahren zum Herstellen einer Hochspannungsdurchführung.**

(30) Priorität: **29.09.78 DE 2843081**

(43) Veröffentlichungstag der Anmeldung:
**16.04.80 Patentblatt 80/8**

(45) Bekanntmachung des Hinweises auf die Patenterteilung:
**27.04.83 Patentblatt 83/17**

(84) Benannte Vertragsstaaten:
**AT BE CH GB IT SE**

(56) Entgegenhaltungen:
**DE-A-1 590 553**
**DE-B-1 056 217**
**DE-B-1 100 745**
**DE-B-1 515 471**
**FR-A-626 101**
**FR-A-868 148**
**FR-A-1 056 904**
**FR-A-1 288 329**
**US-A-3 397 098**
**US-A-3 567 845**

(73) Patentinhaber: **SIEMENS AKTIENGESELLSCHAFT,**
**Berlin und München Wittelsbacherplatz 2,**
**D-8000 München 2 (DE)**

(72) Erfinder: **Weniger, Manfred, Dr., Schuckertdamm 342,**
**D-1000 Berlin 13 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zum Herstellen einer Hochspannungsdurchführung

Die Erfindung geht von einem Verfahren zum Herstellen einer Hochspannungsdurchführung aus, bei dem zusammen mit einer Isolierstoffbahn eine vergleichsweise dünne Kunststoffolie unter Bildung jeweils gemeinsamer Windungen auf einen Dorn gewickelt wird.

Bei einem bekannten Verfahren dieser Art (DE-AS 1 515 471, insbesondere Fig. 1) wird als Isolierstoffbahn ein Papierband verwendet, das bevorzugt aus Kreppapier besteht. Das Papier soll saugfähig sein, weil es zusammen mit einer dünneren Kunststoffolie gewickelt wird, die unter der Einwirkung von Wärme und Druck schmilzt und teilweise in die anliegende Papierbahn eindringt. Die so hergestellte Hochspannungsdurchführung hat den Vorteil, dass sie auch hohen Betriebstemperaturen ausgesetzt werden kann.

Bei einem anderen bekannten Verfahren zum Herstellen einer Hochspannungsdurchführung (DE-AS 1 056 218) werden nebeneinander mehrere Bahnen aus Isolierstoff, beispielsweise Papier oder Filmmaterial, spiralig aufgewickelt, und zwar in der Weise, dass die Bahnen gleichzeitig in zwei Lagen gewickelt werden; die eine Lage überdeckt jeweils die Stossstellen der anderen Lage. Die Isolierstoffbahnen für die beiden Lagen weisen unter anderem eine unterschiedliche Dikke auf. Es lässt sich ein fester Wickel bilden, so dass ein Durchbiegen des Dornes weitgehend vermieden ist.

Schwierigkeiten entstehen bei der Herstellung von Hochspannungsdurchführungen aus einer Isolierstoffbahn mit gleichzeitig eingewickelter dünner Kunststoffolie vor allem, im Hinblick auf die Vermeidung von Falten, die sich beim Aufwikkeln der Isolierstoffbahn leicht bilden können. Dies ist darauf zurückzuführen, dass sich die Isolierstoffbahn wegen ihrer meist verhältnismässig grossen Dicke und Breite ohne Falten in der Regel nicht auf einen Dorn aufwickeln lässt. Falten wiederum führen zu Spaltenbildungen innerhalb der Hochspannungsdurchführung und verursachen dadurch isolationstechnische Schwachstellen in der Durchführung.

Der Erfindung liegt die Aufgabe zugrunde, ein Verfahren zum Herstellen einer Hochspannungsdurchführung mit gemeinsamer Aufwicklung einer Isolierstoffbahn und einer dünnen Kunststoffolie anzugeben, mit dem sich ein weitestgehend falten- und damit auch weitestgehend spaltenfreier Aufbau der Durchführung erreichen lässt.

Zur Lösung dieser Aufgabe wird bei einem Verfahren der eingangs angegebenen Art erfindungsgemäss die dünne Kunststoffolie oberhalb der Isolierstoffbahn auf den Dorn geführt und unter Zug mit elastischer Dehnung gewickelt.

Ein wesentlicher Vorteil des erfindungsgemässen Verfahrens besteht darin, dass sich die dünne Kunststoffolie aufgrund des auf sie ausgeübten Zuges gleichmässig an die darunter befindliche bzw. auf den Dorn auflaufende Isolierstoffbahn anlegt und diese damit ihrerseits ohne Falten an den Dorn bzw. die darunterliegenden Windungen aus der Isolierstoffbahn und der dünnen Kunststoffolie andrückt. Die Dehnung der dünnen Kunststoffolie ist dabei unter Aufwendung einer vergleichsweise geringen Zugspannung erreichbar, weil die Kunststoffolie verhältnismässig dünn ist. Die dünne Kunststoffolie dient bei dem erfindungsgemässen Verfahren also gewissermassen als Zug- bzw. Spannfolie. Ein weiterer Vorteil des erfindungsgemässen Verfahrens ist darin zu sehen, dass durch die unter Zug mit Dehnung aufgewickelte Kunststoffolie eine verhältnismässig feste Hochspannungsdurchführung erzielbar ist, so dass die so hergestellte Hochspannungsdurchführung durchaus als Trage- oder Stützkörper in elektrischen Anlagen eingesetzt werden kann, ohne dass es dazu zusätzlicher mechanischer Einrichtungen zur Stützung der Hochspannungsdurchführung bedarf. Als zusätzlicher Vorteil ist die verhältnismässig einfache Durchführbarkeit des erfindungsgemässen Verfahrens anzusehen, weil es keiner Wärmebehandlung der Hochspannungsdurchführung bedarf, um ihr eine gute mechanische Festigkeit zu verleihen; allein durch das Mitwickeln der dünnen Kunststoffolie unter Zug mit Dehnung wird eine mechanisch feste Hochspannungsdurchführung erreicht.

Es ist zwar bereits bei einem Verfahren zum Herstellen einer Hochspannungsdurchführung bekannt (US-A-3 397 098), eine Bahn aus Isolierstoff unter Zug mit elastischer Dehnung zu wickeln, jedoch handelt es sich bei dieser Bahn um eine z.B. gewellte Isolierstoffbahn, auf die beispielsweise eine glatte Kunststoffolie mit derartiger Stärke gewickelt wird, dass sie die Isolierstoffbahn ohne Deformation tragen kann. Es kann dann jeweils im Bereich der Isolierstoffbahn Giessharz in die Durchführung eingebracht werden, um einen festen Aufbau zu erzielen, wobei sich die Isolierstoffbahn den Volumenänderungen des Giessharzes beim Aushärten anpasst.

Zur Durchführung des erfindungsgemässen Verfahrens können eine Isolierstoffbahn und eine dünne Kunststoffolie mit übereinstimmender Breite benutzt werden. Durch Aufwickeln der Isolierstoffbahn und der dünnen Kunststoffolie in radialer Richtung vom Dorn anwachsend lässt sich dann in einfacher Weise eine scheibenförmige Hochspannungsdurchführung herstellen, wie sie beispielsweise für metallgekapselte Hochspannungsschaltanlagen benötigt wird.

Es kann aber auch vorteilhaft sein, eine Isolierstoffbahn und eine dünne Kunststoffolie mit sich unterscheidender Breite zu verwenden. Dabei kann sowohl die Isolierstoffbahn schmaler als die dünne Kunststoffolie sein, oder es kann auch umgekehrt die dünne Kunststoffolie schmaler als die Isolierstoffbahn sein. Werden die Isolierstoffbahn und die dünne Kunststoffolie mittig aufeinander und radial anwachsend auf den Dorn gewickelt, dann entsteht eine Hochspannungsdurchführung, bei der die jeweils breitere Isolierbahn an beiden Stirnseiten hervorsteht und gewissermassen Schirme bildet, die die Überschlagsfestigkeit erheblich erhöhen.

Es ist aber auch möglich, die Isolierstoffbahn und die dünne Kunststoffolie nicht mittig aufeinander zu wickeln, sondern mit seitlichem Versatz, so dass dann eine trichterförmige Hochspannungsdurchführung gebildet wird. Bei dieser trichterförmigen Durchführung können auch wieder seitliche Schirme durch überstehende Teile der Isolierstoffbahn bzw. der dünnen Kunststoffolie gebildet sein, je nachdem, ob die Isolierstoffbahn breiter als die dünne Kunststoffolie ist oder umgekehrt.

Eine faltenfreie und feste Hochspannungsdurchführung in trichterförmiger Ausbildung lässt sich auch dann erreichen, wenn gemäss einer Weiterbildung des erfindungsgemässen Verfahrens die Isolierstoffbahn mit seitlichem Versatz und die dünne Kunststoffolie radial anwachsend gewickelt werden. In diesem Falle ist die dünne Kunststoffolie schmaler als die Isolierstoffbahn, sorgt aber trotzdem für einen mechanisch festen Aufbau der Hochspannungsdurchführung. Bei einer solchen Hochspannungsdurchführung ist die Imprägnierbarkeit verbessert, so dass beispielsweise Isoliergas gut in den Wickel eindringen kann, wodurch die elektrische Festigkeit weiter erhöht wird.

Wie an sich bekannt (vgl. z.B. DE-AS 1 515 471) können mit der Isolierstoffbahn und der dünnen Kunststoffolie bei der Durchführung des erfindungsgemässen Verfahrens Metallfolien miteingewickelt werden. Die Metallfolien können dabei im Hinblick auf die angestrebte elektrische Festigkeit unterschiedliche oder sich ändernde Breite aufweisen.

Gemäss einer Weiterbildung des erfindungsgemässen Verfahrens kann zur Herstellung einer konusförmig ausgebildeten Hochspannungsdurchführung die dünne Kunststoffolie an der stärksten Stelle der Hochspannungsdurchführung radial anwachsend gewickelt werden, wobei bei einer geeignet bemessenen Breite der dünnen Kunststoffolie allein dadurch eine mechanisch feste Hochspannungsdurchführung erzielbar ist.

Zwar etwas aufwendiger in der Ausführung, aber mit dem Ergebnis einer Hochspannungsdurchführung mit einem mechanisch besonders festen Aufbau, lässt sich bei einer anderen Weiterbildung des erfindungsgemässen Verfahrens eine konusförmig ausgebildete Hochspannungsdurchführung herstellen, indem die dünne Kunststoffolie spiralförmig über die Länge der Hochspannungsdurchführung gewickelt wird. Handelt es sich bei der Hochspannungsdurchführung um eine gesteuerte Durchführung, dann ist die dünne Kunststoffolie vorteilhafterweise die Metallfolie umfassend gewickelt und verhindert dadurch ein Verschieben der Metallfolien innerhalb der Hochspannungsdurchführung.

Bei einer anderen Variante des erfindungsgemässen Verfahrens zur Herstellung einer konusförmig ausgebildeten Hochspannungsdurchführung wird über die Länge der Hochspannungsdurchführung an mehreren Stellen die dünne Kunststoffolie radial anwachsend gewickelt. Die dünne Kunststoffolie ist dabei verhältnismässig schmal und kann daher mit besonders hohem Zug unter Bildung einer mechanisch festen Durchführung gewickelt werden. Bei dieser Variante des erfindungsgemässen Verfahrens wird in dem Falle, in dem eine gesteuerte Hochspannungsdurchführung hergestellt werden soll, die dünne Kunststoffolie in einem von der Breite der Metallfolie bestimmten Abstand voneinander radial anwachsend gewickelt, so dass die einzelnen Metallfolien im Bereich ihrer stirnseitigen Enden jeweils in die dünne Kunststoffolie miteingewickelt und daher in ihrer Lage fixiert sind.

Es ist ferner vorteilhaft, bei einer konusförmig ausgebildeten Hochspannungsdurchführung zur Verbesserung der mechanischen Festigkeit und Halterung der Metallfolien sowie zum Schutz der Folienränder aussen auf den konusförmigen Teil der Durchführung Ringe oder kurze Schläuche aus Schrumpf-Material aufzubringen und einer Wärmebehandlung zu unterwerfen. Bevorzugt sind die Ringe oder Schläuche auf den treppenförmigen Absätzen des konusförmigen Teils angeordnet.

Bei dem erfindungsgemässen Verfahren kann als Isolierstoffbahn eine Papierbahn verwendet werden; es kommt aber auch eine verhältnismässig dicke Kunststoffolie in Frage.

Die dicke Kunststoffolie ist vorteilhafterweise perforiert oder weist eine Struktur z.B. nach Art eines Rautenmusters auf. Dies hat den Vorteil, dass im Falle einer Imprägnierung der Hochspannungsdurchführung mit einem Isoliergas, beispielsweise $SF_6$, die Imprägnierbarkeit verbessert wird. Dieser Vorteil ergibt sich auch, wenn als Isolierstoffbahn ein Gewebe-, Geflecht- oder Vliesband verwendet wird.

Es ist ferner vorteilhaft, wenn auch die Metallfolie aufgerauht oder perforiert ist, weil auch dadurch die Imprägnierbarkeit der Hochspannungsdurchführung mit einem Isoliergas verbessert wird.

Ferner kann es vorteilhaft sein, als dünne Kunststoffolie eine Schrumpf-Folie zu verwenden, die bei Wärmeeinwirkung zusammenschrumpft und dadurch einen ausserordentlichen festen Aufbau der Hochspannungsdurchführung ergibt.

Zur Erläuterung des erfindungsgemässen Verfahrens ist in

Fig. 1 eine scheibenförmige Hochspannungsdurchführung gemäss dem erfindungsgemässen Verfahren in einem Schnitt und in einer Seitenansicht, in

Fig. 2 eine trichterförmige Hochspannungsdurchführung in einem Schnitt, in

Fig. 3 ein Schnitt durch eine scheibenförmige Hochspannungsdurchführung mit gestufter Länge, in

Fig. 4 eine weitere Hochspannungsdurchführung gemäss einer Variante des erfindungsgemässen Verfahrens im Schnitt, in

Fig. 5 eine andere Hochspannungsdurchführung mit seitlichen Schirmen, in

Fig. 6 eine weitere Hochspannungsdurchführung nach dem erfindungsgemässen Verfahren mit eingebetteten Metallfolien, in

Fig. 7 ein zusätzliches Ausführungsbeispiel mit ebenfalls eingebetteten Metallfolien, in

Fig. 8 ein Ausführungsbeispiel einer Hochspannungsdurchführung mit konusförmiger Gestalt, in

Fig. 9 ein Ausführungsbeispiel einer konusförmigen Hochspannungsdurchführung mit kapazitiver Steuerung, in

Fig. 10 ein anderes Ausführungsbeispiel einer konusförmigen, kapazitiv gesteuerten Hochspannungsdurchführung und in

Fig. 11 ein Ausführungsbeispiel einer Hochspannungsdurchführung aus mehreren Einzelteilen wiedergegeben.

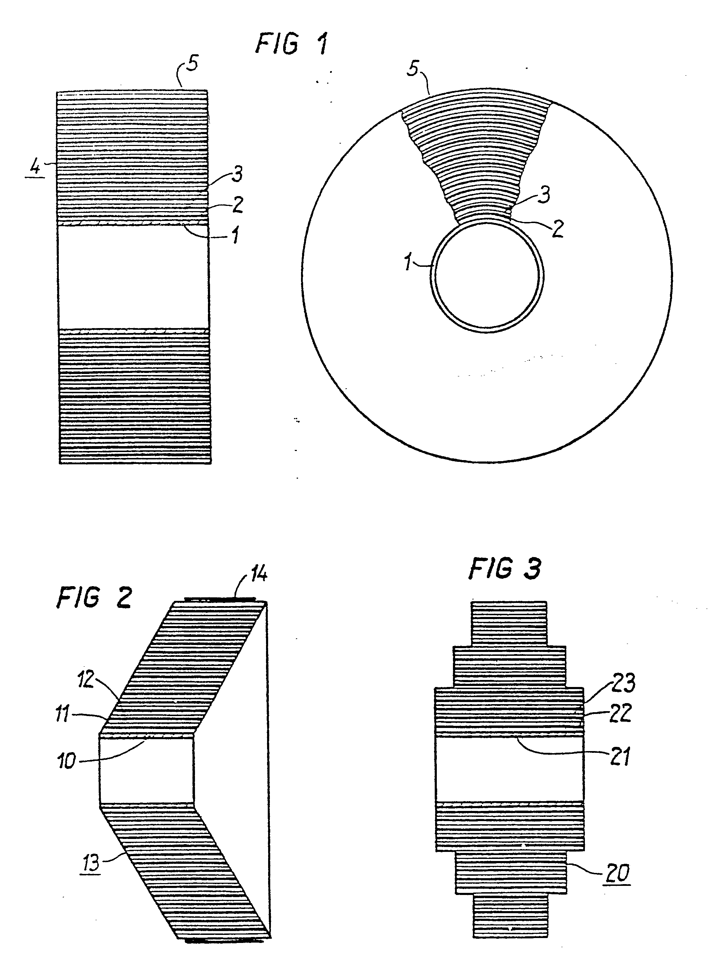

Die in Fig. 1 dargestellte Hochspannungsdurchführung ist in der Weise hergestellt, dass auf einen Dorn 1, der z.B. von einer Metallhülse gebildet sein kann, gleichzeitig die Isolierstoffbahn 2 und die dünne Kunststoffolie 3 aufgewickelt sind. Dabei sind die Isolierstoffbahn 2 und die dünne Kunststoffolie 3 so geführt, dass die Isolierstoffbahn 2 jeweils unterhalb der dünnen Kunststoffolie 3 auf den Dorn 1 aufläuft und somit von der dünnen Kunststoffolie unter Vermeidung einer Faltenbildung gleichmässig und fest an den Dorn 1 gedrückt wird; zu diesem Zwecke ist die dünne Kunststoffolie 3 mit Zug unter elastischer Dehnung gewickelt. Dadurch wird gleichzeitig die Luft zwischen der Isolierstoffbahn 2 und der Kunststoffolie 3 weitgehend entfernt, so dass zusätzliche Verfestigung durch Adhäsions- und Reibungskräfte entsteht. Durch Aufbringen mehrerer Windungen aus der Isolierstoffbahn 2 und der Kunststoffolie 3 entsteht eine scheibenförmige Durchführung 4, die an ihrem äusseren Umfange im dargestellten Ausführungsbeispiel durch eine Metallfolie 5 abgeschlossen ist.

Die in der Fig. 1 dargestellte Hochspannungsdurchführung 4 kann in der Weise eingesetzt werden, dass beispielsweise durch das von der Metallhülse bzw. von dem Dorn 1 gebildete Durchgangsloch ein an Hochspannung liegender Leiter geführt wird, während die Metallfolie 5 auf Erdpotential liegen kann, beispielsweise an einem geerdeten Gehäuse anliegen kann.

Das in der Fig. 2 dargestellte Ausführungsbeispiel einer Hochspannungsdurchführung ist in der Weise hergestellt, dass auf einen Dorn 10 wiederum die Isolierstoffbahn 11 und darauf gleichzeitig die dünne Kunststoffolie 12 unter Zug mit Dehnung gewickelt ist. Dabei ist beim Herstellen der Durchführung 13 darauf geachtet, dass die jeweils nächste Windung aus der Isolierstoffbahn 11 und der dünnen Kunststoffolie 12 mit seitlichem Versatz aufgebracht wird, so dass die Hochspannungsdurchführung 13 nach ihrer Fertigstellung die aus der Fig. 2 erkennbare, trichterförmige Gestalt aufweist. An ihrem äusseren Umfange ist die Hochspannungsdurchführung 13 wiederum mit einer Folie 14 aus Metall umgeben, mit der sie wiederum beispielsweise an ein geerdetes Gehäuse angeschlossen sein kann. Der Dorn 10 kann beim Einsatz der Hochspannungsdurchführung 13 von einem Primärleiter durchsetzt sein.

Das Ausführungsbeispiel einer Hochspannungsdurchführung 20 nach Fig. 3 ist im Prinzip genauso hergestellt wie das nach den Fig. 1 und 3, nur mit dem Unterschied, dass hier auf einen Dorn 21 eine Isolierstoffbahn 22 und eine dünne Kunststoffolie 23 mit gestuft abnehmender Breite gewickelt sind, so dass eine Hochspannungsdurchführung mit nach aussen stufenweise abnehmender Länge gebildet ist.

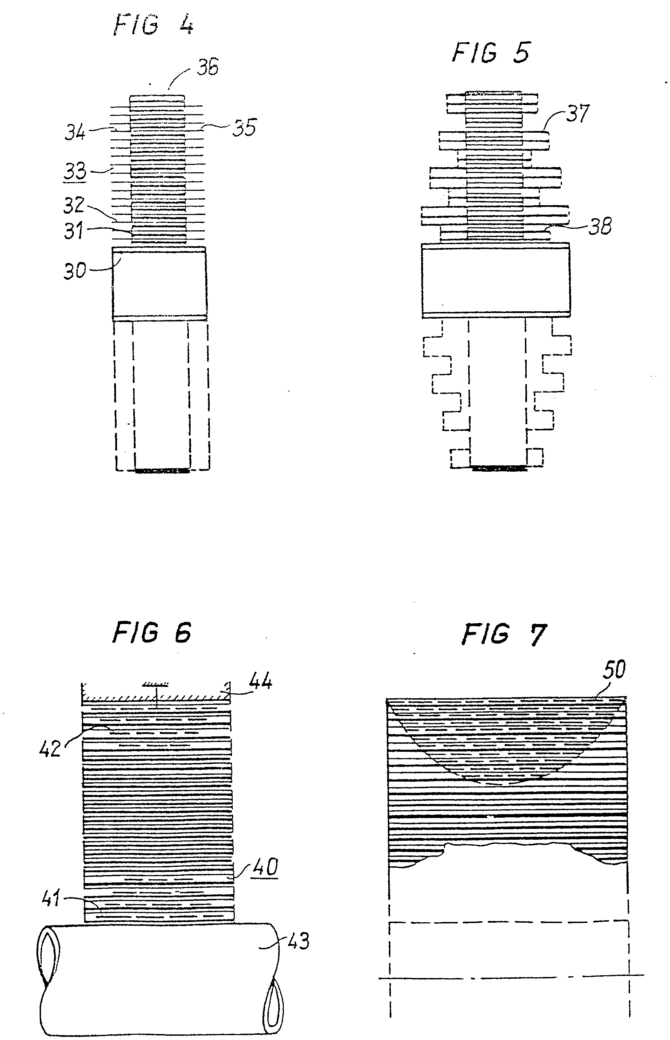

Das Ausführungsbeispiel nach Fig. 4 ist in der Weise hergestellt, dass auf einen Dorn 30 in Form einer Metallhülse wiederum eine Isolierstoffbahn 31 und darauf eine dünne Kunststoffolie 32 gleichzeitig gewickelt sind. Die Isolierstoffbahn 31 hat hier eine geringere Breite als die dünne Kunststoffolie 32, so dass wegen des mittigen und in radialer Richtung anwachsenden Aufwickelns von Isolierstoffbahn 31 und dünner Kunststoffolie 32 eine Hochspannungsdurchführung 33 entsteht, bei der die an beiden Stirnseiten herausragenden Enden 34 und 35 der dünnen Kunststoffolie 32 Schirme bilden, die die elektrische Festigkeit der Hochspannungsdurchführung vergrössern. Am äusseren Umfange der Hochspannungsdurchführung 33 ist wiederum eine Folie 36 aus Metall vorgesehen.

Bei dem Ausführungsbeispiel nach Fig. 5 sind die Schirme 37 durch die Isolierstoffbahn 38 gebildet, die in ihrer Breite über die Höhe des Wickels unterschiedlich ist.

Die Hochspannungsdurchführung nach Fig. 6 ist hinsichtlich des Aufwickelns einer Isolierstoffbahn und einer dünnen Kunststoffolie genauso hergestellt, wie es aus der Fig. 1 ersichtlich ist. Zusätzlich sind bei der Herstellung dieser Hochspannungsdurchführung 40 Metallfolien 41 und 42 miteingewickelt, deren Breite sich über die Wickelhöhe derart verändert, dass jeweils die Kontur einer das elektrische Feld steuernden Elektrode gebildet wird.

Die Durchführung 40 ist von einem Dorn 43 getragen, der bei ihrem Einsatz von einem an Hochspannung liegenden Primärleiter durchsetzt sein kann; aussen ist die Durchführung in einem geerdeten Gehäuse 44 gehalten, bei dem es sich beispielsweise um das Metallrohr einer metallgekapselten Hochspannungsschaltanlage handeln kann.

Die Hochspannungsdurchführung nach Fig. 7 unterscheidet sich von der nach Fig. 6 nur insofern, als hier zur Erzielung einer besseren Elektrodenkontur die Metallfolie 50 in ihrer Breite von aussen nach innen schwächer abnehmend bemessen ist, so dass eine gute Annäherung an eine vorgegebene Kontur erreichbar ist.

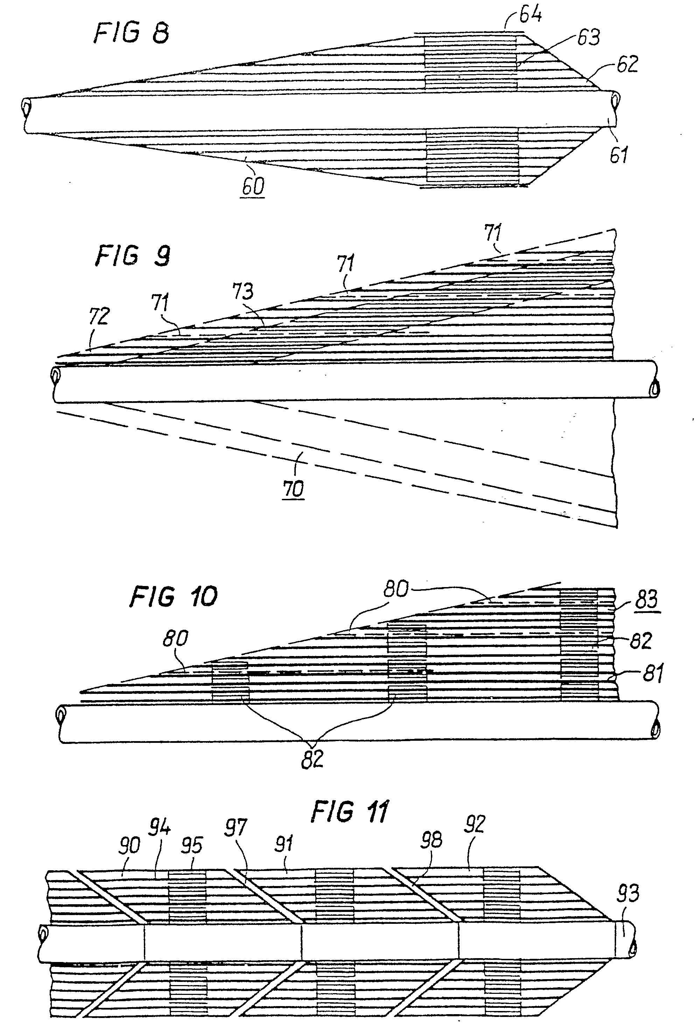

Bei dem Ausführungsbeispiel nach Fig. 8 handelt es sich um eine konusförmig ausgebildete Hochspannungsdurchführung 60, zu deren Herstellung auf einen Dorn 61 eine Isolierstoffbahn 62 und gleichzeitig damit eine dünne Kunststoffolie 63 aufgewickelt sind. Während die Isolierstoffbahn 62 von innen nach aussen in ihrer Breite entsprechend der erforderlichen Gestalt der Hochspannungsdurchführung abnimmt, ist die dünne Kunststoffolie 63 in ihrer Breite nicht verändert, wächst also von innen nach aussen mit gleichbleibender Breite radial an. Aussen ist die Hochspannungsdurchführung wiederum von einer Folie 64 aus Metall umgeben, mit der sie im Einsatzfalle unter Kontaktgabe mit einem beispielsweise geerdeten Gehäuse verbunden werden kann.

Die in der Fig. 9 dargestellte konusförmig ausgebildete Hochspannungsdurchführung 70 ist mit Metallfolien 71 versehen, die eine kapazitive Steuerung bewirken. Die Metallfolien 71 sind bei der Herstellung der Hochspannungsdurchführung miteingewickelt, wobei bei der Aufbringung der im Vergleich zur Isolierstoffbahn 72 verhältnismässig schmalen Kunststoffolie 73 darauf geachtet ist, dass letztere spiralförmig aufgewickelt ist und die Metallfolien 71 umfasst und dadurch in ihrer Lage innerhalb der Hochspannungsdurchführung 70 fixiert.

Die konusförmig ausgebildete Hochspannungsdurchführung nach Fig. 10 ist wiederum mit Metallfolien 80 versehen, die beim Aufwickeln der Isolierstoffbahn 81 und der dünnen Kunststoffolie 82 miteingewickelt sind. Die dünne Kunststoffolie 82 ist hier jedoch in Abweichung von der Ausführung nach Fig. 9 nicht spiralförmig aufgewickelt, sondern über die Länge der Hochspannungsdurchführung 83 jeweils in Abständen radial anwachsend miteingewickelt. Dabei ist der axiale Abstand der Kunststoffolien 82 durch die Länge der Metallfolien 80 bestimmt, weil diese im Bereich ihrer beiden Enden durch die dünne Kunststoffolien 82 festgehalten werden sollen.

Bei dem Ausführungsbeispiel nach Fig. 11 handelt es sich um eine Hochspannungsdurchführung verhältnismässig grosser Länge. Die Hochspannungsdurchführung besteht daher aus einzelnen Teilen 90, 91 und 92, die auf einen Dorn 93 aufgewickelt sind. Jedes Teil 90 bis 92 ist jeweils in der Weise hergestellt, dass auf den Dorn 93 zusammen mit einer Isolierstoffbahn 94 gleichzeitig die dünne Kunststoffolie 95 unter Zug mit Dehnung aufgewickelt wird, wobei die dünne Kunststoffolie 95 im Vergleich zur Isolierstoffbahn verhältnismässig schmal ist und radial anwachsend miteingewickelt ist. Die Isolierstoffbahn 94 hingegen ist mit seitlichem Versatz gewickelt, so dass jeder Teil 90 bis 92 eine trichterförmig ausgebildete Teildurchführung darstellt, die sich zu einer Durchführung verhältnismässig grosser Länge ergänzen. Wird die Durchführung in einem Raum mit Isoliergas untergebracht, dann wird nicht nur jede Teildurchführung 90 bis 92 mit Isoliergas imprägniert, sondern es werden auch die Spalten 97 und 98 mit Isoliergas gefüllt, so dass eine isolationstechnisch feste Hochspannungsdurchführung verhältnismässig grosser Länge gebildet ist.

Mit der Erfindung wird ein Verfahren zum Herstellen einer Hochspannungsdurchführung vorgeschlagen, mit dem sich in einfacher Weise eine elektrisch und mechanisch feste Durchführung erreichen lässt.

**Patentansprüche**

1. Verfahren zum Herstellen einer Hochspannungsdurchführung, bei dem zusammen mit einer Isolierstoffbahn (2) eine vergleichsweise dünne Kunststoffolie (3) unter Bildung jeweils gemeinsamer Windungen auf einen Dorn (1) gewickelt wird, dadurch gekennzeichnet, dass die dünne Kunststoffolie (3) oberhalb der Isolierstoffbahn (2) auf den Dorn (1) geführt wird und dass die dünne Kunststoffolie (3) unter Zug mit elastischer Dehnung gewickelt wird (Fig. 1).

2. Verfahren nach Anspruch 1, dadurch gekennzeichnet, dass eine Isolierstoffbahn (31) und eine dünne Kunststoffolie (32) mit sich unterscheidender Breite verwendet werden.

3. Verfahren nach Anspruch 1 oder 2, dadurch gekennzeichnet, dass die Isolierstoffbahn (31) und die dünne Kunststoffolie (32) mittig aufeinander und radial anwachsend auf den Dorn (30) gewickelt werden.

4. Verfahren nach Anspruch 1 oder 2, dadurch gekennzeichnet, dass die Isolierstoffbahn (11) und die dünne Kunststoffolie (12) mit seitlichem Versatz unter Bildung einer trichterförmigen Hochspannungsdurchführung (13) gewickelt werden.

5. Verfahren nach Anspruch 1 oder 2, dadurch gekennzeichnet, dass die Isolierstoffbahn (94) mit seitlichem Versatz und die dünne Kunststoffolie (95) radial anwachsend unter Bildung einer trichterförmigen Hochspannungsdurchführung (90) gewickelt werden.

6. Verfahren nach einem der vorangehenden Ansprüche, dadurch gekennzeichnet, dass mit der Isolierstoffbahn und der dünnen Kunststoffolie Metallfolien (41, 42) miteingewickelt werden.

7. Verfahren nach Anspruch 6, dadurch gekennzeichnet, dass Metallfolien (41, 42) unterschiedlicher oder sich ändernder Breite verwendet werden.

8. Verfahren nach einem der Ansprüche 1, 2, 6 und 7 zur Herstellung einer konusförmig ausgebildeten Hochspannungsdurchführung, dadurch gekennzeichnet, dass die dünne Kunststoffolie (63) an der stärksten Stelle der Hochspannungsdurchführung (60) radial anwachsend mit gleichbleibender Breite gewickelt wird.

9. Verfahren nach Anspruch 1 oder 2 zur Herstellung einer konusförmig ausgebildeten Hochspannungsdurchführung, dadurch gekennzeichnet, dass die dünne Kunststoffolie (73) spiralförmig über die Länge der Hochspannungsdurchführung (70) gewickelt wird.

10. Verfahren nach Anspruch 6 oder 7 und 9, dadurch gekennzeichnet, dass die dünne Kunststoffolie (73) die Metallfolien (71) umfassend gewickelt wird.

11. Verfahren nach Anspruch 1 oder 2 zur Herstellung einer konusförmig ausgebildeten Hochspannungsdurchführung, dadurch gekennzeichnet, dass über die Länge der Hochspannungsdurchführung an mehreren Stellen die dünne Kunststoffolie (82) radial anwachsend gewickelt wird.

12. Verfahren nach Anspruch 6 oder 7 und 11, dadurch gekennzeichnet, dass die dünne Kunststoffolie (82) in einem von der Breite der Metallfolie (80) bestimmten Abstand voneinander radial anwachsend gewickelt wird.

13. Verfahren nach einem der Ansprüche 8 bis 12, dadurch gekennzeichnet, dass aussen auf dem konusförmigen Teil der Hochspannungsdurchführung Ringe oder kurze Schläuche aus Schrumpf-Material aufgebracht werden.

14. Verfahren nach einem der vorangehenden Ansprüche, dadurch gekennzeichnet, dass als Isolierstoffbahn eine Papierbahn verwendet wird.

15. Verfahren nach einem der Ansprüche 1 bis 13, dadurch gekennzeichnet, dass als Isolierstoffbahn eine verhältnismässig dicke Kunststoffolie verwendet wird.

16. Verfahren nach Anspruch 15, dadurch gekennzeichnet, dass die dicke Kunststoffolie perforiert ist oder eine Struktur nach Art eines Rautenmusters aufweist.

17. Verfahren nach einem der Ansprüche 1 bis 13, dadurch gekennzeichnet, dass als Isolierstoffbahn ein Gewebe-, Geflechtband oder ein Band aus Vliesmaterial verwendet wird.

18. Verfahren nach einem der vorangehenden Ansprüche, dadurch gekennzeichnet, dass als dünne Kunststoffolie eine Schrumpf-Folie verwendet wird.

19. Verfahren nach einem der vorangehenden Ansprüche, dadurch gekennzeichnet, dass die Metallfolien aufgerauht oder perforiert sind.

## Claims

1. A process for the production of a high voltage duct, in which together with a web of insulating material (2), a comparatively thin synthetic resin film (3) is wound onto a mandrel (1) so as to form common windings, characterised in that the thin synthetic resin film (3) is led over the insulating material web (2) onto the mandrel (1); and that the thin synthetic resin film (3) is wound under tension with elastic stretching. (Fig. 1).

2. A process according to Claim 1, characterised in that an insulating material web (31) and a thin synthetic resin Film (32) having different widths are used.

3. A process according to Claim 1 or Claim 2, characterised in that the insulating material web (31) and the thin synthetic resin film (32) are wound onto the mandrel (30) coaxially and so as to exhibit an increasing radius.

4. A process according to Claim 1 or Claim 2, characterised in that the insulating material web (11) and the thin synthetic resin film (12) are wound with a lateral offset so as to form a funnel-shaped high voltage duct (13).

5. A process according to Claim 1 or Claim 2, characterised in that the insulating material web (94) is wound with a lateral offset, whilst the thin synthetic resin film (95) is wound so as to exhibit an increase in radius, thus forming a funnel-shaped high voltage duct (90).

6. A process according to one of the preceding Claims, characterised in that metal foils (41, 42) are wound together with the insulating material web and the thin synthetic resin film.

7. A process according to Claim 6, characterised in that metal foils (41, 42) of different or varying width are used.

8. A process according to one of Claims 1, 2, 6 and 7, for the production of a conical high voltage duct, characterised in that at the thickest point of the high voltage duct (60) the thin synthetic resin film (63) is wound so as to exhibit an increase in radius, but at constant width.

9. A process according to Claim 1 or Claim 2, for the production of a conical high voltage duct, characterised in that the thin synthetic resin film (73) is wound helically over the length of the high voltage duct (70).

10. A process according to Claim 6 or Claim 7, and Claim 9, characterised in that the thin synthetic resin film (73) is wound so as to grip the metal foils (71).

11. A process according to Claim 1 or Claim 2, for the production of a conical high voltage duct, characterised in that the thin synthetic resin film (82) is wound so as to exhibit an increase in radius at several points along the length of the high voltage duct.

12. A process according to Claim 6 or Claim 7 and Claim 11, characterised in that the thin synthetic resin film (82) is wound so as to exhibit an increase in radius at a spacing determined by the width of the metal foil (80).

13. A process according to one of Claims 8 to 12, characterised in that rings or short tubes made of shrinkable material are applied externally to the conical part of the high voltage duct.

14. A process according to one of the preceding Claims, characterised in that the insulating material web is a paper web.

15. A process according to one of Claims 1 to 13, characterised in that a relatively thick synthetic resin film is used as the insulating material web.

16. A process according to Claim 15, characterised in that the thick synthetic resin film is perforated or possesses a losenge pattern.

17. A process according to one of Claims 1 to 13, characterised in that a strip of fabric, mesh or fleece is used as the insulating material web.

18. A process as claimed in one of the preceding Claims, characterised in that a shrinkable film is used as the thin synthetic resin film.

19. A process as claimed in one of the preceding Claims, characterised in that the metal foils are roughened or perforated.

## Revendications

1. Procédé pour fabriquer une traversée à haute tension, suivant lequel une feuille de matière plastique (3) relativement mince est enroulée sur un mandrin (1) en même temps qu'un ruban de matériau isolant (2), en formant respectivement des spires communes, caractérisé par le fait que la mince feuille de matière plastique (3) est amenée sur le mandrin (1) au-dessus du ruban de matériau isolant (2) et que la mince feuille de matière plastique (3) est enroulée avec traction et étirage élastique.

2. Procédé suivant la revendication 1, caractérisé par le fait qu'on utilise un ruban de matériau isolant (31) et une mince feuille de matière plastique (32) de largeur différente.

3. Procédé suivant l'une des revendications 1 ou 2, caractérisé par le fait que le ruban de matériau isolant (31) et la mince feuille de matière plastique (32) sont enroulés sur le mandrin (30) en étant superposés de façon centrée et avec une épaisseur de bobinage qui croît radialement.

4. Procédé suivant l'une des revendications 1 ou 2, caractérisé par le fait que le ruban de matériau isolant (11) et la mince feuille de matière plastique (12) sont enroulés avec un décalage latéral, en formant une traversée à haute tension (13) en forme d'entonnoir.

5. Procédé suivant l'une des revendications 1 ou 2, caractérisé par le fait que le ruban de matériau isolant (94) est enroulé avec un décalage latéral et que la mince feuille de matière plastique (95) est enroulée avec une épaisseur de bobinage qui croît radialement, en formant une traversée à haute tension (90) en forme d'entonnoir.

6. Procédé suivant l'une des revendications précédentes, caractérisé par le fait que des feuilles métalliques (41, 42) sont enroulées en même temps que le ruban de matériau isolant et la mince feuille de matière plastique.

7. Procédé suivant la revendication 6, caractérisé par le fait que l'on utilise des feuilles métalliques (41, 42) de largeur différente ou variable.

8. Procédé suivant l'une des revendications 1, 2, 6 et 7 pour fabriquer une traversée à haute tension de forme conique, caractérisé par le fait que la mince feuille de matière plastique (63) est enroulée avec une épaisseur de bobinage qui croît radialement et avec une largeur constante, à l'endroit le plus épais de la traversée à haute tension (60).

9. Procédé suivant la revendication 1 ou 2 pour fabriquer une traversée à haute tension de forme conique, caractérisé par le fait que la mince feuille de matière plastique (73) est enroulée en spirale sur la longueur de la traversée à haute tension (70).

10. Procédé suivant l'une des revendications 6 ou 7 et 9, caractérisé par le fait que la mince feuille de matière plastique (73) est enroulée en entourant les feuilles métalliques (71).

11. Procédé suivant l'une des revendications 1 ou 2 pour fabriquer une traversée à haute tension de forme conique, caractérisé par le fait que la mince feuille de matière plastique (82) est enroulée avec une épaisseur de bobinage qui croît radialement en plusieurs endroits suivant la longueur de la traversée à haute tension.

12. Procédé suivant l'une des revendications 5 ou 7 et 11, caractérisé par le fait que la mince feuille de matière plastique (82) est enroulée avec une épaisseur de bobinage qui croît radialement à une distance mutuelle qui est déterminée par la largeur de la feuille métallique (80).

13. Procédé suivant l'une des revendications 8 à 12, caractérisé par le fait que des anneaux ou de courts tuyaux de matériau rétractable sont disposés à l'extérieur sur la partie conique de la traversée à haute tension.

14. Procédé suivant l'une des revendications précédentes, caractérisé par le fait qu'on utilise un ruban de papier comme ruban de matériau isolant.

15. Procédé suivant l'une des revendications 1 à 13, caractérisé par le fait qu'on utilise une feuille de matière plastique relativement épaisse comme ruban de matériau isolant.

16. Procédé suivant la revendication 15, caractérisé par le fait que la feuille de matière plastique épaisse est perforée ou possède une structure du type d'un dessin à losange.

17. Procédé suivant l'une des revendications 1 à 13, caractérisé par le fait qu'on utilise comme ruban de matériau isolant un ruban tissé ou entrelacé ou un ruban de matériau non tissé.

18. Procédé suivant l'une des revendications précédentes, caractérisé par le fait qu'on utilise une feuille rétractable comme mince feuille de matière plastique.

19. Procédé suivant l'une des revendications précédentes, caractérisé par le fait que les feuilles métalliques ont une surface rugueuse ou sont perforées.

0 009 622

FIG 1

FIG 2

FIG 3

9

0 009 622

FIG 4

FIG 5

FIG 6

FIG 7

11

FIG 8

FIG 9

FIG 10

FIG 11